# EUROPÄISCHE PATENTSCHRIFT

(11) **EP 2 167 351 B1**
(45) Veröffentlichungstag und Bekanntmachung des Hinweises auf die Patenterteilung: **26.12.2012**
(21) Anmeldenummer: 08759699.5
(22) Anmeldetag: 16.05.2008
(51) Int. Cl.: B60R 21/0136

(54) **VERFAHREN UND STEUERGERÄT ZUR ANSTEUERUNG VON PERSONENSCHUTZMITTELN FÜR EIN FAHRZEUG**
METHOD AND CONTROL DEVICE FOR ACTUATING VEHICLE OCCUPANT 'S SAFETY MEANS FOR A VEHICLE
PROCEDE ET APPAREIL DE COMMANDE DESTINES A COMMANDER DES SYSTEMES DE PROTECTION DES PERSONNES DANS UN VEHICULE

(30) Priorität: 14.06.2007 DE 102007027492
(43) Veröffentlichungstag der Anmeldung: 31.03.2010
(73) Patentinhaber: Robert Bosch GmbH, 70442 Stuttgart (DE)
(72) Erfinder: TRINH, Hoang, 71254 Ditzingen (DE); WALTHER, Ralf, 26160 Bad Zwischenahn (DE)
(86) Internationale Anmeldenummer: PCT/EP2008/056063
(87) Internationale Veröffentlichungsnummer: WO 2008/151903

(56) Entgegenhaltungen:
- WO-A-99/17965
- DE-A1- 10 245 780
- DE-A1- 19 855 452
- DE-A1-102004 031 557
- DE-A1-102004 038 984
- DE-A1-102005 020 146

## Beschreibung

### Stand der Technik

Die Erfindung betrifft ein Verfahren bzw. ein Steuergerät zur Ansteuerung von Personenschutzmitteln nach der Gattung der unabhängigen Patentansprüche.

Aus DE 37 29 019 A1 ist eine Einrichtung zur Auslösung einer Sicherheitsvorrichtung bekannt. Dabei wird diese Einrichtung durch eine Zuordnung von Körperschallsensoren in die Lage versetzt, einen Aufprall auf Hindernisse von sonstigen entsprechenden Geräuschen und Störungen bei kritischen Fahrbedingungen zu unterscheiden und auszuwerten. Insbesondere wird ein Spektrumanalysator verwendet.

Aus DE 10 2004 031557 A1 ist ein Verfahren zur Aktivierung von Insassen-Schutzeinrichtungen in einem Kraftfahrzeug bei Crashfällen bekannt, bei dem mithilfe eines prozessorgestützten Auslösesystems Signale von Crash-Sensoren ausgewertet und die Insassen-Schutzeinrichtungen angesteuert werden. Das Verfahren beruht im Wesentlichen auf der Auswertung von Körperultraschall-Signaturen und ggf. zusätzlicher Signal-Signaturen.

### Offenbarung der Erfindung

Das erfindungsgemäße Verfahren bzw. das erfindungsgemäße Steuergerät zur Ansteuerung von Personenschutzmitteln für ein Fahrzeug haben demgegenüber den Vorteil, dass die Personenschutzmittel in Abhängigkeit von einem Unfallsignal und dem Körperschallsignal oder einer davon abgeleiteten Größe angesteuert werden, wobei zuvor das Körperschallsignal in Abhängigkeit von wenigstens einem Reibungsprozess, der in der Fahrzeugstruktur stattfindet, bewertet wird.

Körperschatlsignale entstehen bei einem Fahrzeugunfall durch unterschiedliche Mechanismen wie die Deformation, Bruchprozesse, aber auch durch nichtlineare Prozesse wie beispielsweise die Reibungsprozesse. Diese nichtlinearen

Prozesse sind schlecht reproduzierbar und auch die Geschwindigkeitsabhängigkeit ist nichtlinear.

Die störenden Reibungsprozesse werden erfindungsgemäß im Crash identifiziert, um diese dann gezielt ausblenden zu können. Störende Reibungsprozesse finden immer in der gleichen Fahrzeugstruktur statt, beispielsweise am Querträger. Durch das Ausblenden dieser Körperschallsignale, die aufgrund der Reibungsprozesse entstehen, wird eine verbesserte bzw. frühere Erkennung von harten und weichen Crashs ermöglicht. Damit kann eine bessere hierarchische Diskriminierung von Crashs, beispielsweise durch unterschiedliche Algorithmuspfade für die Crasherkennung, ermöglicht werden. Insgesamt wird auch die Misuse-Robustheit erhöht. Ein Misuse ist ein Aufprall, der keine Auslösung bewirken soll, beispielsweise ein Parkrempler. Durch das erfindungsgemäße Verfahren bzw. Steuergerät kann beispielsweise eine Luftdrucksensorik für die Seitenaufprallsensierung oder auch periphere Beschleunigungssensoren vermieden werden, indem das erfindungsgemäße Verfahren es auch ermöglicht, eine schnelle Plausibilisierung eines Unfalls anzuzeigen.

Durch das erfindungsgemäße Verfahren und das erfindungsgemäße Steuergerät wird die Verwendung von Körperschallsensorsignalen für die Ansteuerung von Personenschutzmitteln verbessert und auf eine sicherere Basis gestellt. Anstatt eines Körperschallsignals können auch vom Körperschallsignal abgeleitete Signale, wie beispielsweise das integrierte Körperschallsignal, verwendet werden.

Ansteuern bedeutet vorliegend die Aktivierung bzw. das Auslösen von Personenschutzmitteln. Unter Personenschutzmitteln sind aktive und passive Personenschutzmittel wie Bremsen, Fahrdynamikregelung, Airbags, Gutstraffer, Überrollbügel und crashaktive Kopfstützen und der gleichen zu verstehen.

Das Körperschallsignal ist vorliegend das verarbeitete Hochfrequenzsignal einer Beschleunigungssensorik, wobei unter Verarbeitung beispielsweise eine Bandpassfilterung und die Bestimmung der Einhüllenden gemeint sind. Die davon abgeleitete Größe ist beispielsweise das integrierte Körperschallsignal, wobei auch andere Verarbeitungsmethoden verwendet werden können, um diese Größe zu erzeugen. Die Größe kann eine Mehrzahl von einzelnen Signalen umfassen, die auch unterschiedlich aus dem Körperschallsignal erzeugt sein können.

Unter dem Unfallsignal sind Signale von einer Unfallsensorik wie einer Beschleunigungssensorik, einer Luftdrucksensorik, einer Umfeldsensorik oder auch einer Körperschallsensorik selbst gemeint.

Ein Reibungsprozess ist, wie oben dargestellt, ein Reiben von Fahrzeugstrukturkomponenten, die zu hohen Körperschallsignalen führen können. Beispielsweise kann bei einer Schraubverbindung zwischen der Crashbox und dem Querträger es zu einem zusätzlichen Anschlagen des Querträgers auf die Crashbox in der frühen Crashphase kommen, und zwar aufgrund des nicht kraftschlüssigen Kontakts, welcher durch den Freiheitsgrad in der Längsrichtung der Schraublösung hervorgerufen wird. Aber auch andere Reibungsprozesse sind zu beachten.

Unter Fahrzeugstruktur ist das Fahrzeuggestell, mithin das Chassis des Fahrzeugs zu verstehen.

Unter Bewerten wird, wie in den abhängigen Ansprüchen dargelegt, beispielsweise ein Schwellwertvergleich verstanden. Auch eine Gewichtung, Zuschläge oder Abschläge können unter Bewertung verstanden werden.

Die Schnittstellen sind vorliegend hard- und/oder softwaremäßig ausgebildet, wobei eine softwaremäßige Schnittstelle als Softwaremodul auch auf einen Mikrocontroller oder einem anderen Prozessor als der Auswerteschaltung in einem Steuergerät selbst angeordnet sein kann. Die Schnittstelle kann aus einem integrierten Schaltkreis, einer Mehrzahl von integrierten Schaltkreisen oder aus diskreten Bauelementen oder aus einer Kombination von einem integrierten Schaltkreis und diskreten Bauelementen bestehen.

Die Auswerteschaltung ist vorliegend ein Prozessor, beispielsweise ein Mikrocontroller, wobei auch andere Prozessortypen möglich sind. Auch ein anderer integrierter Schaltkreis oder ein Aufbau aus diskreten Bauelementen oder aus mehreren integrierten Schaltkreisen ist vorliegend möglich.

Dabei kann das Bewertungsmodul ein Abschnitt der Auswerteschaltung sein, sodass eine hardwaremäßige Identifizierung des Bewertungsmoduls vorliegt. Es ist jedoch möglich, dass das Bewertungsmodul auch als Softwaremodul, also als ein Programm, vorliegt. Dies gilt auch für das Entscheidungsmodul.

Durch die in den abhängigen Ansprüchen aufgeführten Maßnahmen und Weiterbildungen sind vorteilhafte Verbesserungen des in den unabhängigen Patentansprüchen angegebenen Verfahrens zur Ansteuerung von Personenschutzmitteln bzw. des in den unabhängigen Patentansprüchen angegebenen Steuergeräts zur Ansteuerung von Personenschutzmitteln für ein Fahrzeug möglich.

Vorteilhaft ist, dass die Bewertung in Abhängigkeit von der Zeit und/oder von einer Geschwindigkeit und/oder von einer Vorverlagerung erfolgt, wobei dadurch der wenigstens eine Reibungsprozess charakterisiert wird. Die Fahrzeugstruktur korreliert mit einer Intrusion, also einer Vorverlagerung und damit lässt sich über diese Intrusion das Körperschallsignal in geeigneter Art und Weise gewichten bzw. ausblenden. Die Intrusion ist nämlich ein Mass dafür, wie das Kollisionsobjekt in die Fahrzeugstruktur eindringt. Diese Korrelation ermöglicht eine modellbasierte Gewichtung des Körperschalls in Abhängigkeit von den realen Fahrzeugstrukturen, wie dem Querträger der Crashbox und dem Längsträger, denen die Fahrzeugstruktur bekannt ist. Das Körperschallsignal oder ein davon abgeleitetes Signal über den Deformationsweg bzw. Intrusion zu analysieren ist vorteilhaft, weil dadurch ein Mapping bzw. eine Identifizierung von entstehenden Körperschallsignalen aus der Deformation der Bruchprozesse der entsprechenden Fahrzeugstrukturen möglich wird.

Die Zerstörung der Fahrzeugstrukturen ist crashspezifisch und korreliert insbesondere mit der Crashschwere. Unter der Crashschwere sind die Folgen des Unfalls zu verstehen, beispielsweise dass bei einem Aufprall mit hoher Geschwindigkeit eine höhere Crashschwere vorliegt als bei einem Aufprall mit niedrigerer Crashschwere und beispielsweise entsprechend niedrigerer Geschwindigkeit. Über eine intrusionsabhängige Schwelle können die Körperschallsignale fahrzeugstrukturabhängig gewichtet werden. Ebenfalls sinnvoll ist eine Gewichtung mit Hilfe der Geschwindigkeitsreduktion, da die Fahrzeugstrukturen unterschiedlich steif ausgelegt sind. Die unterschiedlichen Strukturen führen zu einer unterschiedlichen Energieaufnahme. Die Bewertung des Körperschallsignals und einer davon abgeleiteten Größe in Abhängigkeit von der Zeit und/oder der Geschwindigkeit und/oder der Vorverlagerung bietet den Vorteil, dass damit einfach messbare bzw. bestimmbare Größen vorliegen, für die ein großer Erfahrungsschatz auf dem Gebiet der Airbagelektronik besteht. Die Geschwindigkeit kann durch die Integration eines Beschleunigungssignals und die Vonrerlagerung durch die zweifache Integration bestimmt werden. Wie oben dargestellt, korrelieren die Vorverlagerung und die Geschwindigkeit mit dem Reibungsprozess.

Mit den Größen der Zeit, der Geschwindigkeit und der Vorverlagerung wird eine erste Schwelle vorteilhafterweise für das Körperschallsignal oder einer davon angeleiteten Größe festgelegt und die Bewertung erfolgt in Abhängigkeit von einem ersten Schwellenvergleich. Das heißt das Körperschallsignal muss diese erste Schwelle überschreiten, sodass es überhaupt einen Einfluss auf den Hauptalgorithmus bezüglich der Auswertung der Unfallsignale haben kann.

In Abhängigkeit von der Bewertung wird dann eine zweite Schwelle für das Unfallsignal ausgewertet. Das heißt es kann das Körperschallsignal bezüglich seines absoluten Wertes bzw. des davon abgeleiteten Signals oder eines Differenzwertes zwischen der Schwelle und dem Körperschallsignal verwendet werden, um die zweite Schwelle auszuwählen. Dies kann beispielsweise über ein sogenanntes Look-up-Table erfolgen, es ist jedoch auch möglich, eine Formel zu definieren, um dann in Abhängigkeit von dieser Formel die Kennlinie auszurechnen und auszugeben. Diese Formel kann auf empirischen und/oder analytischen Betrachtungen beruhen.

Es ist weiterhin möglich, dass die Bewertung in Abhängigkeit von Daten über die Fahrzeugstruktur erfolgt, beispielsweise über die Art der Verbindung zwischen dem Querträger und der Crashbox. Dies ermöglicht eine bessere Festlegung der Schwellwerte für das Unfallsignal und für das Körperschallsignal bzw. das davon abgeleitete Signal. Damit werden die Auslösungen noch genauer. Zu diesen Daten zählen die Crashbox, die Belastbarkeit der Crashbox sowie die Art der Verbindung zwischen dem Querträger und der Crashbox. Andere Daten können hierfür verwendet werden. Diese Daten können insbesondere Informationen über die Art der Verbindung zwischen Querträger und Crashbox aufweisen, ob beispielsweise die Verbindung als Schweißverbindung oder Schraubverbindung ausgebildet ist.

Es ist weiterhin von Vorteil, dass in Abhängigkeit vom Körperschallsignal oder einem davon abgeleiteten Signal und der Zeit und/oder der Geschwindigkeit und/oder der Vorverlagerung eine Unterscheidung zwischen einem harten und einem weichen Crash durchgeführt werden kann. Dies ermöglicht eine genauere Weiterverarbeitung der so bereits gewonnenen Signale. Dabei kann diese Unterscheidung zwischen hartem und weichem Crash direkt auf den Hauptalgorithmus Einfluss nehmen, bei dem das Unfallsignal zur Entscheidungsfindung herangezogen wird, ob die Personenschutzmittel anzusteuern sind oder nicht. Die Unterscheidung zwischen hartem und weichem Crash kann hier auch einen Einfluss auf die Schwellen in diesem Hauptalgorithmus haben. Auch eine logische Verknüpfung dieser Bestimmung mit anderen Ergebnissen im Hauptalgorithmus ist vorliegend möglich.

Es ist weiterhin vorteilhaft, dass die Unterscheidung durch einen zweiten Schwellenvergleich mit einer dritten Schwelle des Körperschallsignals und einer davon abgeleiteten Größe getroffen wird. Diese dritte Schwelle für den zweiten Schwellenvergleich wird in Abhängigkeit von der Zeit und/oder der Geschwindigkeit und/oder der Vorverlagerung gebildet. Die Schwellen können beispielsweise dadurch festgelegt werden - was auch für die erste Schwelle gilt - dass die Schwelle so gezogen wird, dass ein hoher NoFire-Crash gerade unter dieser Schwelle liegt und ein niedriger MustFire-Crash gerade über dieser Schwelle. Das heißt mittels bekannter Größen für das jeweilige Fahrzeug wird die entsprechende Schwelle, beispielsweise durch ein Fittingprogramm, appliziert. Die Daten über die No-Fire-Crashes (Misuse) und der MustFire-Crashes liegen aus experimentellen und/oder simulierten Daten vor.

Es ist weiterhin von Vorteil, dass der erste oder zweite Schwellenvergleich auch für eine Plausibilisierung der Ansteuerungsentscheidung verwendet wird. Das heißt es wird geprüft, ob das Körperschallsignal oder eine davon abgeleitete Größe die entsprechende Schwelle übertrifft oder nicht, und in Abhängigkeit davon wird eine Plausibilisierungsflagge gesetzt. Dies kann dann im Hauptalgorithmus geprüft werden.

Ausführungsbeispiele der Erfindung sind in der Zeichnung dargestellt und werden in der nachfolgenden Beschreibung näher erläutert.

Es zeigen
Figur 1 ein Blockschaltbild des erfindungsgemäßen Steuergeräts in einem Fahrzeug,
Figur 2 Softwaremodule auf den Mikrocontrollern,
Figur 3 ein erstes Signal-Ablaufdiagramm,
Figur 4 ein zweites Signal-Ablaufdiagramm,
Figur 5 eine schematische Darstellung der Fahrzeugfront,
Figur 6 ein Körperschallsignal bzw. Körperschallsignalmerkmal Zeit- bzw.
Geschwindigkeits- bzw. Vorverlagerungsdiagramm,
Figur 7 ein zweites solches Diagramm und
Figur 8 ein drittes solches Diagramm.

Wie oben dargestellt entstehen Körperschallsignale durch unterschiedliche Mechanismen. Für die Aufprallerkennung sind die Mechanismen wichtig, die durch den Aufprall an sich entstehen, wie beispielsweise die Deformation oder Bruchprozesse, störend sind jedoch Reibungsprozesse, die zwar auch in Folge des Aufpralls entstehen, aber Signale anderer Mechanismen, wie der Deformation und der Bruchprozesse, evtl. überdecken und somit die Analyse des Aufpralls erschweren oder gar unmöglich machen können. Beispielsweise kann bei einem sogenannten langsamen AZT-Crash mit 15 km/h eine Deformation des Querträgers und der Crashbox vorkommen, was zu einem signifikanten Körperschallsignal führt. Hingegen wird bei einem harten und schellen Crash, beispielsweise bei dem sogenannten US NCAP mit 56 km/h, eine sehr schnelle und simultane Zerstörung der vorderen Bauteile wie dem Querträger und der Crashbox erfolgen und im weiteren Verlauf die Längsträger und weitere Fahrzeugstrukturen deformiert werden.

Der beim Crash entstehende Körperschall hängt direkt von der strukturellen Eigenschaft des Fahrzeugs ab, wobei die Charakteristik oder der Körperschallsignalverlauf im Prinzip für alle Fahrzeuge übertragbar ist aufgrund der doch sehr ähnlichen Fahrzeugstruktur. Das Kollabieren einzelner Bauteile wie der Crashbox ist daher geschwindigkeitsabhängig, wobei dabei auch Verbindungstechniken wie eine Schraubverbindung oder eine Schweißverbindung zwischen dem Querträger und der Crashbox eine erhebliche Rolle spielen, da diese zu Reibungsprozessen führen können.

Die Faktoren Geschwindigkeit und Querträger-Crashbox-Verbindung können bewirken, dass ein Körperschallsignal oder eine davon abgeleitete Größe bei einem so genannten NoFire-Crash AZT im Verhältnis zu einem MustFire-Crash ODB 40 im ungünstigsten Fall höher ausfällt, sodass eine globale, zeitüch unabhängige Schwelle für eine Trennung zwischen Auslösefall und Nichtauslösefall nicht mehr ausreichen kann. In diesen Fällen wird erfindungsgemäß eine komplexere Schwelle, die sich beispielsweise über der Zeit der Geschwindigkeit oder der Intrusion verändert, herangezogen. Dabei sind jedoch auch andere, genauere Verfahren wie eine Mustererkennung oder Korrelationstechniken möglich. Sind die Reibungsprozesse a priori gut bekannt, dann können solche Reibungsprozesse beispielsweise auch maskiert werden. Im Spektrum kann dabei auch eine Interpolation solcher maskierten Signale erfolgen.

Die Ableitung des Körperschallsignals, was vorliegend als Signalgröße oder Merkmal bezeichnet wird, ist vorzugsweise das erste Integral des Körperschallsignals, wobei die Integralbildung pragmatisch gemeint ist, beispielsweise ein Fensterintegral oder auch eine Summenbildung oder auch eine Filterung.

Komplexe Schwellen können auch aus Verknüpfungen der Zeit der Geschwindigkeit und der Intrusion festgelegt werden.

Die Erfindung ermöglicht dabei auch, periphere Beschleunigungssensoren oder Luftdrucksensoren zur Seitenaufprallsensierung zu ersetzen oder beispielsweise den Plausibilitätsbeschleunigungssensor für den Luftdrucksensor zu substituieren.

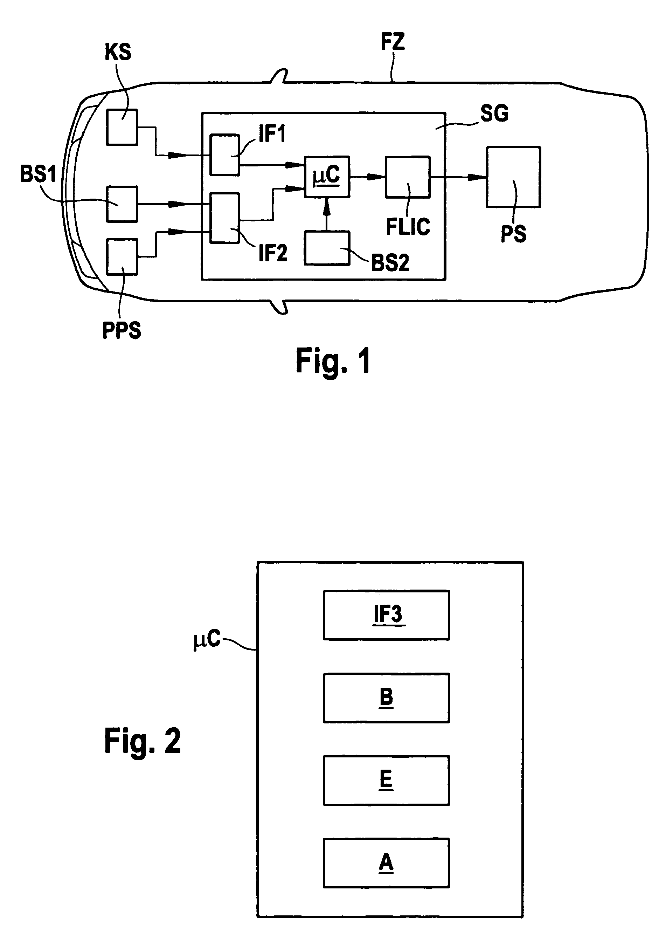

Figur 1 zeigt in einem Blockschaltbild das erfindungsgemäße Steuergerät SG im Fahrzeug FZ. An eine erste Schnittstelle IF1 des Steuergeräts SG ist eine außerhalb des Gehäuses des Steuergeräts SG befindliche Körperschallsensorik KS angeschlossen. Diese Körperschallsensorik KS ist eine Beschleunigungssensorik, die auch hochfrequente Signale ausgeben kann und somit den Körperschall. Die Körperschallsensorik KS kann dabei sich im Steuergerät SG befinden oder auch in einem Sensorcluster. Auch die Anordnung in einem weiteren Steuergerät ist möglich. An eine zweite Schnittstelle IF2 ist eine Beschleunigungssensorik BS1 und eine Luftdrucksensorik PPS als die Unfallsensoren angeschlossen, um die Unfallsensorsignale an die zweite Schnittstelle IF2 zu übertragen. Im Steuergerät SG selbst ist vorliegend eine zweite Beschleunigungssensorik BS2 angeordnet. Die Beschleunigungssensorik kann in unterschiedlichen Raumrichtungen empfindlich sein. Die Luftdrucksensorik PPS ist vorzugsweise in den Seitenteilen zur Detektion eines Seitenaufpralls angeordnet. Die Schnittstellen IF1, IF2 und die Beschleunigungssensorik BS2 sind an einen Mikrocontroller µC als der Auswerteschaltung angeschlossen. Der Mikrocontroller µC bestimmt in Abhängigkeit von diesen Signalen, ob eine Ansteuerung erfolgen soll oder nicht. Soll eine solche Ansteuerung erfolgen, dann wird ein Signal, beispielsweise über ein SPI (Serial Peripherial Interface)-bus an eine Ansteuerungsschaltung FLIC, übertragen. Die Ansteuerungsschaltung FLIC, die ebenfalls als IC oder eine Mehrzahl von lCs oder einer Kombination aus diskreten Bauelementen und ICs vorliegt, aktiviert dann die Personenschutzmittel PS.

Erfindungsgemäß führt der Mikrocontroller µC mit einem Bewertungsmodul eine Bewertung des Körperschallsignals oder einer davon abgeleiteten Größe, wie dem ersten Integral des Körperschallsignals, in Abhängigkeit von wenigstens einem Reibungsprozess, der in der Fahrzeugstruktur stattfindet, durch. Diese Abhängigkeit wird beispielsweise durch entsprechende Schwellenvergleiche mit vorher festgelegten Schwellen oder auch adaptiven Schwellen oder mit einer Mustererkennung oder mit Korrelationstechniken oder Interpolationstechniken durchgeführt. Das so bewertete Körperschallsignal oder die davon abgeleitete bewertete Größe gehen dann ein in ein Entscheidungsmodul, in das auch die Unfallsignale eingehen, um zu entscheiden, ob die Personenschutzmittel angesteuert werden sollen oder nicht. Das Bewertungsmodul und das Entscheidungsmodul sind vorliegend Softwaremodule. Es ist jedoch möglich, diese Module auch einer getrennten Hardware zuzuordnen, sodass das Bewertungsmodul aus Schaltkreisen besteht und das Entscheidungsmodul aus andren Schaltkreisen. Diese Schaltkreise können auf einem einzigen Substrat oder auf verschiedenen Substraten angeordnet sein.

Vorliegend sind nur die für die Erfindung notwendigen Komponenten dargestellt. Für den Betrieb der Vorrichtung bzw. des Steuergeräts sind noch mehr Komponenten erforderlich. Diese sind jedoch der Einfachheit halber weggelassen worden.

Wie oben dargestellt, können die Schnittstellen IF1 und IF2 auch softwaremäßig ausgebildet sein, beispielsweise auf den Mikrocontroller µC selbst.

Figur 2 zeigt nun Beispiele von Softwaremodulen, die sich auf dem Mikrocontroller µC befinden. Dazu zählt beispielsweise die Schnittstelle IF3 zur Anbindung des Beschleunigungssensors BS2. Weiterhin sind das Bewertungsmodul B, das Entscheidungsmodul E und ein Auswertemodul A dargestellt Das Bewertungsmodul B und das Entscheidungsmodul E führen die oben angegebene Funktion aus. Das Auswertemodul A erzeugt dann das Ansteuersignal je nachdem, wie das Entscheidungsmodul E entschieden hat. Beliebige Strukturen bezüglich der Softwaremodule sind hier möglich, wobei diese eben genannten Funktionen jedoch ausgeführt werden müssen.

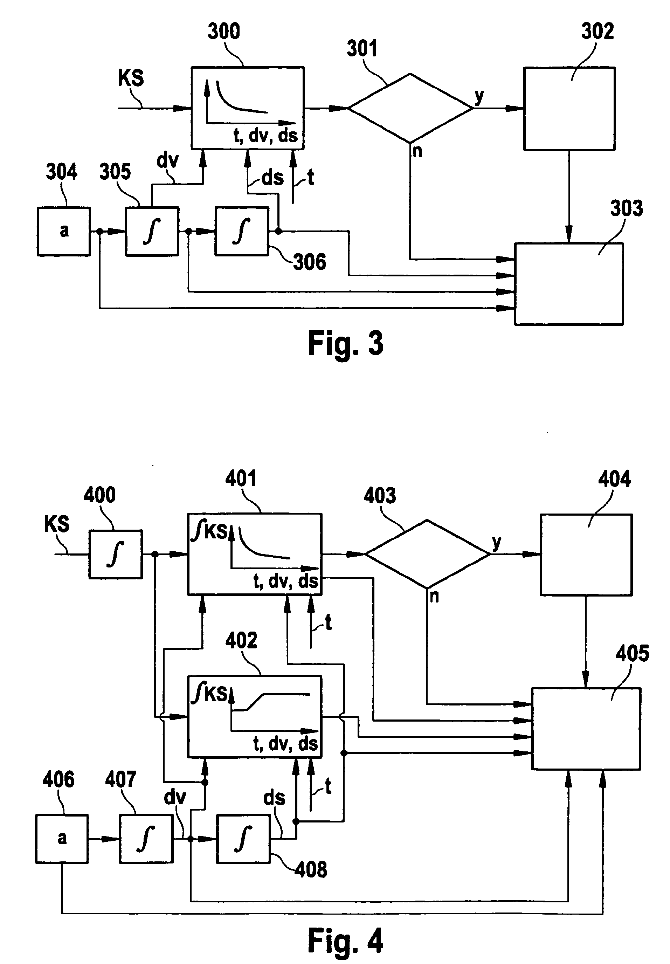

Figur 3 zeigt nun ein erstes Signal-Ablaufdiagramm, das das erfindungsgemäße Verfahren illustrieren soll. Das Körperschallsignal KS geht in ein Bewertungsmodul 300 ein, in das auch als weitere Parameter die Zeit, die Geschwindigkeit und die Vorverlagerung eingehen. Dabei wird aus der Beschleunigung 304 von der Beschleunigungssensorik BS1, BS2 durch ein- 305 und zweifache Integration 306 die Geschwindigkeit dv und die Vorverlagerung ds jeweils bestimmt. Diese Größen a, dv und ds gehen auch in der Hauptalgorithmus ein. Dabei ist alternativ möglich, dass nur eine Untermenge der Größen a, dv und ds in den Hauptalgorithmus eingeht. Es ist möglich, dass weitere nicht dargestellte Größen in den Hauptalgorithmus eingehen.

Mit den Größen t, dv und/oder ds wird eine Kennlinie definiert, mit der das Körperschallsignal KS verglichen wird. Im Block 301 wird dann geprüft, ob das Körperschallsignal KS über der Kennlinie liegt oder nicht. Ist das der Fall, dann wird im Block 302 anhand des Körperschallsignals oder der Differenz des Körperschallsignals mit der Kennlinie ausgewählt, welche Schwelle im Hauptalgorithmus für das Unfallsignal oder die Unfallsignale verwendet werden soll. Diese Schwelle wird dann im Hauptalgorithmus 303 verwendet.

Wurde jedoch im Block 301 festgestellt, dass das Körperschallsignal unter der Schwelle im Bewertungsmodul 300 liegt, dann wird auch dies an den Hauptalgorithmus übertragen und es wird keine Schwelle in Abhängigkeit vom Körperschallsignal ausgewählt.

Figur 4 zeigt ein weiteres Signalablaufdiagramm mit Variation im Vergleich zur Figur 3. Das Körperschallsignal KS wird vorliegend im Block 400 einmal integriert. Damit wird eine vom Körperschallsignal KS abgeleitete Größe, nämlich das erste Integral, hergestellt. Diese Größe geht sowohl auf den Block 401, als auch auf den Block 402. Der Block 401 hat die gleiche Aufgabe, wie der Block 300, nämlich zu entscheiden, ob das Körperschallsignal KS einen Auslösefall anzeigt oder nicht, indem es einen Schwellenvergleich durchführt in Abhängigkeit von der Zeit t und/oder der Geschwindigkeit dv und/oder der Vorverlagerung ds. Dies wird dann in Verfahrensschritt 403 geprüft, wobei wiederum bei einem Überschreiten der Kennlinie im Block 401 im Block 404 dann die Auswahl der Schwelle für den Hauptalgorithmus 405 erfolgt. Ist das nicht der Fall, dann wird dieses Ergebnis an den Hauptalgorithmus 405 weitergegeben. Nun wird jedoch auch direkt vom Block 401 ein Signal an den Hauptalgorithmus 405 weitergegeben als Plausibilisierungssignal. Durch die Auswertung des Körperschallsignals ist ein unabhängiger Signalpfad im Vergleich zur Auswertung des Unfallsignals gegeben. Durch zwei solche unabhängige Hardwarepfade kann eine Plausibilisierung erfolgen.

Die Beschleunigung a, das ist das niederfrequente Ausgangssignal des Beschleunigungssensors im Gegensatz zum hochfrequenten Ausgangssignal, das das Körperschallsignal ist, wird im Block 406, beispielsweise durch eine der vorgenannten Schnittstellen bereitgestellt. Daraus werden im Block 407 durch einfache Integration die Geschwindigkeit dv und daraus dann im Block 408 durch erneute einfache Integration die Vorverlagerung ds bestimmt. Diese Größen gehen wie oben dargestellt auf die Blöcke 401 und 402. Sie gehen jedoch auch in den Hauptalgorithmus 405 ein, wobei auch vorliegend nicht alle Größen a, dv, ds, sondern nur eine Untermenge, beispielsweise dv und ds in den Hauptalgorithmus 405 eingehen können.

In Block 402 wird nun mit einer weiteren Schwelle geprüft, ob es sich anhand des ersten Integrals des Körperschallsignals um einen harten oder weichen Crash handelt Auch diese Kennlinie kann in Abhängigkeit von der Zeit und/oder der Geschwindigkeit und/oder der Vorverlagerung bestimmt werden. Dieses Ergebnis geht ebenfalls in den Hauptalgorithmus 405 ein und kann so die Auswertung in diesem Hauptalgorithmus verfeinern bzw. ebenfalls plausibilisieren.

Für einen Fachmann sind alle möglichen sinnvollen Kombinationen aus den Figuren 3 und 4 leicht erschließbar.

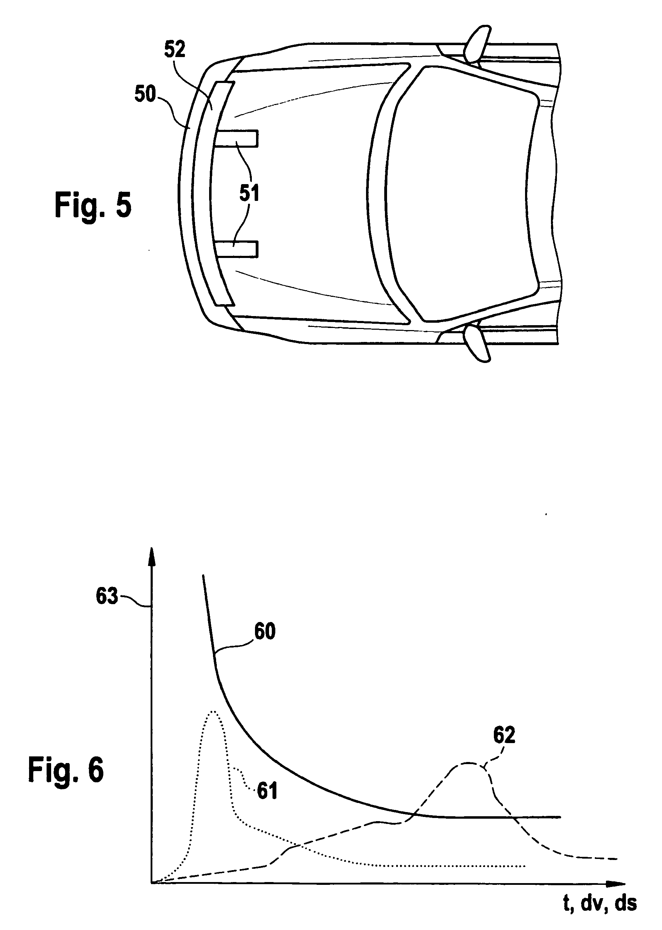

Figur 5 zeigt schematisch eine Fahrzeugfront mit einem Stoßfänger 50, einem Querträger 52 und den Crashboxen 51, die in den Querträger 52 eingebaut sind. Die Verbindung zwischen dem Querträger 52 und den Crashboxen 51 kann durch Schweißen oder Verschraubung erfolgen. Bei einer Verschraubung kann das Reibungssignal von erheblicher Größe sein und muss erfindungsgemäß berücksichtigt werden.

Figur 6 zeigt ein Beispiel für eine Schwelle, die entscheidet, ob das Körperschallsignal einen Auslösecrash anzeigt oder nicht. Die Schwelle ist mit dem Bezugszeichen 60 gebildet und wurde anhand von Crashversuchen festgelegt. Auf der Ordinate 63 wird das Körperschallsignal oder das Merkmal, das davon abgeleitet wurde wie das erste Integral, abgetragen. Auf der Abszisse ist die Zeit und/oder die Geschwindigkeit und/oder die Vorverlagerung angeordnet. Gepunktet ist ein sogenannter NoFire-Crash 61 dargestellt, der einen sogenannten Misuse darstellt, also einen Aufprall, der jedoch keine Auslösung von Personenschutzmitteln nach sich ziehen soll. Die Kennlinie 60 ist so ausgelegt, dass ein solcher sogenannter NoFire-Crash 61 gerade noch darunter liegt.

Gestrichelt ist ein sogenannter MustFire-Crash 62 dargestellt, der einen solchen Aufprall kennzeichnet, der die Auslösung von Personenschutzmitteln bedingen soll. Dafür ist dieser MustFire-Crash 62 über der Kennlinie 60, so dass anhand dieser Auswertung mit der Schwelle 60 auf einen Auslösefall erkannt wird.

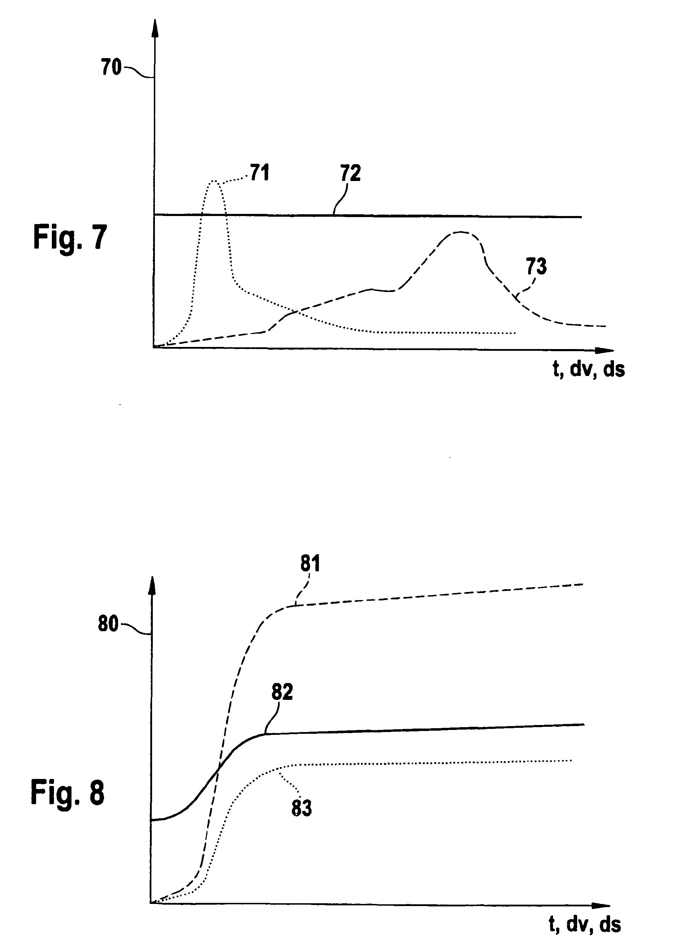

Figur 7 zeigt für das Körperschallsignal 70 auf der Ordinate eine waagerechte Schwelle 72, um zwischen einem harten Crash 71 und einem weichen Crash 73 zu unterscheiden. Dabei kann sowohl der harte Crash 71, als auch der weiche Crash 73 jeweils einen Auslösefall bedeuten. Für die Ansteuerung bzw. die Auswertung des Unfallsignals ist diese Information jedoch von großer Bedeutung. Beim Körperschallsignal bietet sich eine waagerechte Schwelle an. Es ist jedoch möglich, diese Schwelle auch mit Steigungen zu behaften.

Figur 8 zeigt nun eine solche Schwelle, hier jedoch für das Körperschallmerkmal, nämlich das erste Integral des Körperschallsignals 80. Die Schwelle 82 ist dabei zunächst als eine S-Kurve ausgebildet und geht dann in eine leichte Steigung über. Diese Kennlinie wurde wiederum anhand von Crashversuchen festgelegt, nämlich damit der größte weiche Crash 83 noch von dem kleinsten harten Crash 81 zu unterscheiden ist.

Da die Signale nicht instantan die Schwellen überschreiten, ist eine Beobachtung über einen gewissen Zeitraum erforderlich. Dieser wird auch erfahrungsmäßig festgelegt Dafür werden insbesondere Crashversuche durchgeführt.

## Patentansprüche

1. Verfahren zur Ansteuerung von Personenschutzmitteln (PS) in Abhängigkeit von einem Körperschallsignal (KS), **dadurch gekennzeichnet, dass** die Personenschutzmittel (PS) in Abhängigkeit von einem Unfallsignal und von dem Körperschallsignal oder einer davon abgeleiteten Größe angesteuert werden und dass zuvor das Körperschallsignal oder die davon abgeleitete Größe in Abhängigkeit von wenigstens einem Reibungsprozess, der in der Fahrzeugstruktur stattfindet, bewertet wird, wobei die Bewertung in Abhängigkeit von der Zeit und/oder von einer Geschwindigkeit und/oder von einer Vorverlagerung erfolgt, wobei dadurch der wenigstens eine Reibungsprozess charakterisiert wird.

2. Verfahren nach Anspruch 1, **dadurch gekennzeichnet, dass** die Zeit und/oder die Geschwindigkeit und/oder die Vorverlagerung eine erste Schwelle für das Körperschallsignal oder die davon abgeleitete Größe festlegen und die Bewertung in Abhängigkeit von dem ersten Schwellenvergleich erfolgt.

3. Verfahren nach Anspruch 1 oder 2, **dadurch gekennzeichnet, dass** in Abhängigkeit von der Bewertung eine zweite Schwelle für das Unfallsignal ausgewählt wird.

4. Verfahren nach einem der vorhergehenden Ansprüche, **dadurch gekennzeichnet, dass** die Bewertung in Abhängigkeit von Daten über die Fahrzeugstruktur erfolgt.

5. Verfahren nach Anspruch 4, **dadurch gekennzeichnet, dass** die Daten wenigstens eine Verbindung zwischen einer Crashbox und einem Querträger angeben.

6. Verfahren nach einem der vorhergehenden Ansprüche, **dadurch gekennzeichnet, dass** in Abhängigkeit von Körperschallsignal und der Zeit und/oder der Geschwindigkeit und/oder der Vorverlagerung eine Unterscheidung zwischen einem harten und einem weichen Crash durchgeführt wird.

7. Verfahren nach Anspruch 6, **dadurch gekennzeichnete, dass** die Unterscheidung durch einen zweiten Schwellenvergleich des Körperschallsignals oder der davon abgeleiteten Größe getroffen wird, wobei eine dritte Schwelle für den zweiten Schwellenvergleich in Abhängigkeit von der Zeit und/oder der Geschwindigkeit und/oder der Vorverlagerung gebildet wird.

8. Verfahren nach Anspruch 2 oder 7, **dadurch gekennzeichnet, dass** anhand des ersten und/oder zweiten Schwellenvergleichs eine Plausibilisierung der Ansteuerung durchgeführt wird.

9. Steuergerät zur Ansteuerung von Personenschutzmitteln (PS) für ein Fahrzeug (FZ) mit:
- einer ersten Schnittstelle (IF1), die ein Körperschallsignal (KS) oder eine davon abgeleitete Größe bereitstellt
- eine zweite Schnittstelle (IF2), die ein Unfallsignal bereitstellt
- einer Auswerteschaltung (µC) mit einem Bewertungsmodul (D), das das Körperschallsignal (KS) oder die davon abgeleitete Größe in Abhängigkeit von wenigstens einem Reibungsprozess, der in der Fahrzeugstruktur stattfindet, bewertet wobei die Bewertung in Abhängigkeit von der Zeit und/oder von einer Geschwindigkeit und/oder von einer Vorverlagerung erfolgt, wobei dadurch der wenigstens eine Reibungsprozess charakterisiert wird, und mit einem Entscheidungsmodul (E), das die Ansteuerung in Abhängigkeit von dem Unfallsignal und dem bewerteten Körperschallsignal oder der davon abgeleiteten bewerteten Größe entscheidet.

## Claims

1. Method for actuating vehicle occupant protection means (PS) as a function of a solid-borne sound signal (KS), wherein the vehicle occupant protection means (PS) are actuated as a function of an accident signal and of the solid-borne sound signal or of a variable derived therefrom, and wherein the solid-borne sound signal or the variable derived therefrom is evaluated in advance as a function of at least one friction process which takes place in the vehicle structure, **characterized in that** the evaluation takes place as a function of the time and/or of a speed and/or of a forward movement, wherein this characterizes the at least one friction process.

2. Method according to Claim 1, **characterized in that** the time and/or the speed and/or the forward movement define/defines a first threshold for the solid-borne sound signal or the variable derived therefrom, and the evaluation takes place as a function of the first threshold comparison.

3. Method according to Claim 1 or 2, **characterized in that** a second threshold is evaluated for the accident signal as a function of the evaluation.

4. Method according to one of the preceding claims, **characterized in that** the evaluation takes place as a function of data relating to the vehicle structure.

5. Method according to Claim 4, **characterized in that** the data specify at least one connection between a crash box and a crossmember.

6. Method according to one of the preceding claims, **characterized in that** a differentiation is made between a hard crash and a soft crash as a function of the solid-borne sound signal and the time and/or the speed and/or the forward movement.

7. Method according to Claim 6, **characterized in that** the differentiation is made by means of a second threshold comparison of the solid-borne sound signal or the variable derived therefrom, wherein a third threshold is formed for the second threshold comparison as a function of the time and/or the speed and/or the forward movement.

8. Method according to Claim 2 or 7, **characterized in that** plausibility checking of the actuation is carried out on the basis of the first and/or second threshold comparison.

9. Control unit for actuating vehicle occupant protection means (PS) for a vehicle (FZ), having:
- a first interface (IF1), which makes available a solid-borne sound signal (KS) or a variable derived therefrom,
- a second interface (IF2) which makes available an accident signal,
- an evaluation circuit (µC) having an evaluation module (D) which evaluates the solid-borne sound signal (KS) or the variable derived therefrom as a function of at least one friction process which takes place in the vehicle structure, wherein the evaluation takes place as a function of the time and/or of a speed and/or of a forward movement, wherein this characterizes the at least one friction process, and having a decision module (E) which determines the actuation as a function of the accident signal and the evaluated solid-borne sound signal or the evaluated variable derived therefrom.

## Revendications

1. Procédé pour commander des moyens de protection de personnes (PS) en fonction d'un signal de bruit structurel (KS), les moyens de protection de personnes (PS) étant commandés en fonction d'un signal d'accident et du signal de bruit structurel ou d'une grandeur qui en est dérivée et le signal de bruit structurel ou la grandeur qui en est dérivée étant préalablement évalué(e) en fonction d'au moins un processus de frottement qui a lieu dans la structure du véhicule, **caractérisé en ce que** l'évaluation est effectuée en fonction du temps et/ou d'une vitesse et/ou d'un décalage vers l'avant, l'au moins un processus de frottement étant ainsi caractérisé.

2. Procédé selon la revendication 1, **caractérisé en ce que** le temps et/ou la vitesse et/ou le décalage vers l'avant définissent un premier seuil pour le signal de bruit structurel ou la grandeur qui en est dérivée en fonction de la première comparaison de seuil.

3. Procédé selon la revendication 1 ou 2, **caractérisé en ce qu'**en fonction de l'évaluation, un deuxième seuil pour le signal d'accident est sélectionné.

4. Procédé selon l'une des revendications précédentes, **caractérisé en ce que** l'évaluation est effectuée en fonction de données relatives à la structure du véhicule.

5. Procédé selon la revendication 4, **caractérisé en ce que** les données indiquent au moins une relation entre un coffret de détection de collision et une traverse.

6. Procédé selon l'une des revendications précédentes, **caractérisé en ce qu'**une différenciation est faite entre une collision violente et une collision légère en fonction du signal de bruit structurel et du temps et/ou de la vitesse et/ou du décalage vers l'avant.

7. Procédé selon la revendication 6, **caractérisé en ce que** la différenciation est effectuée par une deuxième comparaison de seuils du signal de bruit structurel ou de la grandeur qui en est dérivée, un troisième seuil étant calculé pour la deuxième comparaison de seuil en fonction du temps et/ou de la vitesse et/ou du décalage vers l'avant.

8. Procédé selon la revendication 2 ou 7, **caractérisé en ce qu'**une évaluation de la plausibilité de la commande est effectuée à l'aide de la première et/ou de la deuxième comparaison de seuil.

9. Contrôleur pour commander des moyens de protection de personnes (PS) pour un véhicule (FZ) comprenant :
- une première interface (IF1) qui délivre un signal de bruit structurel (KS) ou une grandeur qui en est dérivée,
- une deuxième interface (IF2) qui délivre un signal d'accident,
- un circuit d'interprétation (µC) muni d'un module d'évaluation (D) qui évalue le signal de bruit structurel (KS) ou la grandeur qui en est dérivée en fonction d'au moins un processus de frottement qui a lieu dans la structure du véhicule, l'évaluation étant effectuée en fonction du temps et/ou d'une vitesse et/ou d'un décalage vers l'avant, l'au moins un processus de frottement étant ainsi caractérisé, et comprenant un module de décision (E) qui décide de la commande en fonction du signal d'accident et du signal de bruit structurel évalué ou de la grandeur qui en est dérivée évaluée.
